# EUROPEAN PATENT APPLICATION

(11) **EP 2 680 564 A1**
(43) Date of publication of application: **01.01.2014**
(21) Application number: 12815307.9
(22) Date of filing: 18.07.2012
(51) Int. Cl.: H04N 1/387, G06Q 30/02

(54) **DIGITAL WATERMARK ADVERTISING CONTENT SERVICE SYSTEM**

(30) Priority: 21.07.2011 JP 2011160110
(71) Applicant: Hitachi Solutions, Ltd., Tokyo 140-0002 (JP)
(72) Inventor: KAMITANI Motoki, Tokyo 140-0002 (JP); MANO Masahiko, Tokyo 140-0002 (JP); EGUCHI Hironori, Tokyo 140-0002 (JP); TAJIMA Kazuteru, Tokyo 140-0002 (JP)
(74) Representative: Liesegang, Eva
(86) International application number: PCT/JP2012/068227
(87) International publication number: WO 2013/012013

(57) **Abstract**

The present invention provides an advertising content service system including a client terminal equipped with a camera, and a server that provides an advertising content associated with a digital watermark ID received from the client terminal. The client terminal includes a means for reading a digital watermark image embedded in a medium with the advertising content printed or displayed thereon by using the camera, analyzing the digital watermark image, extracting the digital watermark ID from the digital watermark image, and transmitting the digital watermark ID to the server. The server includes a means for acquiring from a database a detail of the advertising content associated with the digital watermark ID received from the client terminal, and transmitting the detail to the client terminal as a request source for display.

## Description

### TECHNICAL FIELD

The present invention relates to a digital watermark advertising content service system for reading an advertising content embedded with digital watermark using a camera attached to a user's cellular phone or PDA, for example, and delivering from a server detailed information about a product and the like identified by the digital watermark embedded at a position selected by the user.

### BACKGROUND ART

In a conventional technology, when providing advertising information for various products to general users, a QR code (registered trademark) (three-dimensional barcode) is printed for each product or product category in an advertising content printed on a leaflet as a paper medium. The QR code (registered trademark) is read using a camera attached to a user terminal, such as a cellular phone, and then, the read QR code is transmitted via the Internet to a server. The server delivers detailed information about the product (such as its specifications, shape, price, or inventory status) corresponding to the received QR code (registered trademark) to the user terminal.

A known example of the technology is disclosed in the following Patent Document 1.

Patent Document 1: JP Patent Publication (Kokai) No. 2006-18724 A

### SUMMARY OF THE INVENTION

### PROBLEM TO BE SOLVED BY THE INVENTION

However, according to the above conventional technology, the QR code (registered trademark) needs to be printed in the advertising content on the paper medium, so that the design of the advertising content is degraded by the QR code (registered trademark) itself. Particularly, in the case of advertising content placed on fashion magazines and the like targeting women, the advertising content itself is created with a classy-looking atmosphere. No matter how classy-looking the advertising content is, the QR code (registered trademark) greatly lowers its design, thus reducing its advertising effects and resulting in a failure to achieve an expected increase in the number of accesses to the server.

An object of the present invention is to provide a digital watermark advertising content service system that can increase the number of accesses to advertising content without degrading the design of the advertising content.

### MEANS FOR SOLVING THE PROBLEMS

In order to achieve the above object, a digital watermark advertising content service system according to the present invention includes a client terminal equipped with a camera, and a server that provides an advertising content associated with a digital watermark ID received from the client terminal. The client terminal includes a means for reading a digital watermark image embedded in a medium with the advertising content printed or displayed thereon by using the camera, analyzing the digital watermark image, extracting the digital watermark ID from the digital watermark image, and transmitting the digital watermark ID to the server. The server includes a means for acquiring from a database a detail of the advertising content associated with the digital watermark ID received from the client terminal, and transmitting the detail to the client terminal as a request source for display.

The digital watermark image embedded in the medium may be an icon image of the digital watermark ID that is uniquely determined for each detail of the advertising content.

The digital watermark image embedded in the medium may be an image created by attaching to an arbitrary image the digital watermark ID that is uniquely determined for each detail of the advertising content.

The advertising content may have a plurality of digital watermark images embedded therein, and the client terminal may transmit only the digital watermark ID of the digital watermark image selected by a user to the server.

### EFFECTS OF THE INVENTION

According to the present invention, a digital watermark that is not identifiable by the human eye is embedded in the advertising content instead of the QR code (registered trademark), and the details of the advertising content identified by the digital watermark are acquired from a server. Thus, the number of accesses to the advertising content can be increased without degrading the design of the advertising content.

### BRIEF DESCRIPTION OF DRAWINGS

FIG. 1 is an overall configuration diagram of an embodiment of an advertising content service system according to the present invention.
FIG. 2 illustrates the outline of an advertising content utilization process using digital watermark in an advertising content service system according to the present invention.
FIG. 3 is a flowchart of a process for creating a digital watermark image according to the embodiment of FIG. 1.
FIG. 4 is a flowchart of the outline of a process involving a digital watermark client terminal and a digital watermark managing server according to the embodiment of FIG. 1.
FIG. 5 is a flowchart of the outline of a process involving the digital watermark client terminal and the digital watermark managing server according to the embodiment of FIG. 1.
FIG. 6 shows a configuration example of digital watermark information management data.
FIG. 7 illustrates an example of URL list information for advertising content associated with a digital watermark ID.
FIG. 8 illustrates an example of display content on an interactive screen of a digital watermark utilizing client.
FIG. 9 illustrates a configuration example of collected data of access information for advertising content utilizing the digital watermark ID.
FIG. 10 illustrates a configuration example of operation consolidating data recording the status of access operation from the digital watermark client terminal to advertising content.

### MODE FOR CARRYING OUT THE INVENTION

In the following, an embodiment of the present invention will be described in detail with reference to the drawings.

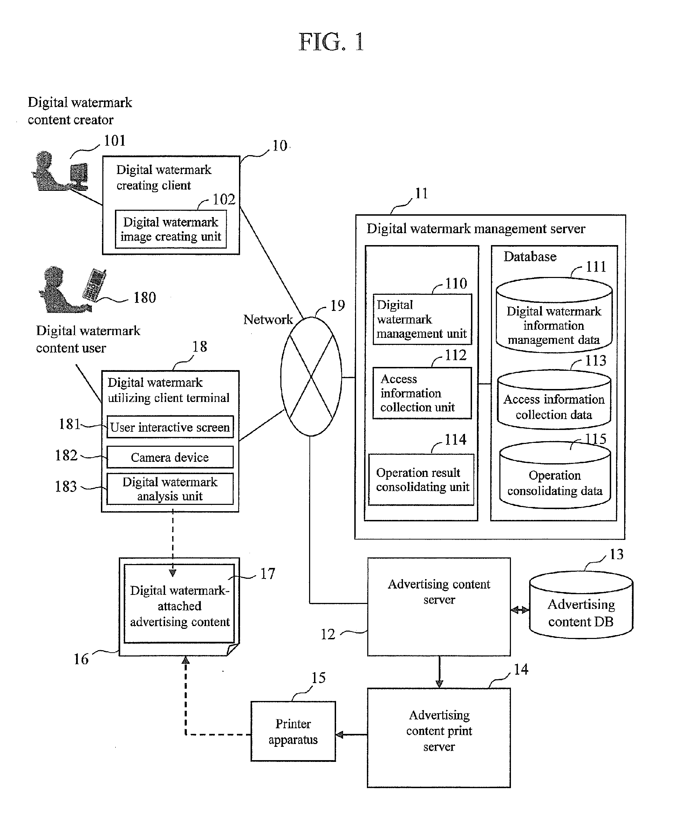

FIG. 1 is an overall configuration diagram of an embodiment of an advertising content service system according to the present invention.

The advertising content service system according to the present embodiment includes a digital watermark creating client terminal 10, a digital watermark managing server 11, an advertising content server 12, an advertising content DB 13, an advertising content print server 14, a printer apparatus 15, a paper medium 16 printed with a digital watermark-attached advertising content 17, and a digital watermark utilizing client terminal 18.

The digital watermark creating client terminal 10 is an information terminal, such as a personal computer, that enables a digital watermark content creator 101 to create a digital watermark image embedded in an advertising content. The digital watermark image is created by using a digital watermark image creating unit 102. For the created digital watermark image, a unique digital watermark ID is created, which is then managed by the digital watermark managing server 11.

The digital watermark image may be created by any of the following methods: (1) a substitution method by which watermark information that is not identifiable by the human eye is embedded in a noise portion of an advertising content image; (2) a selective method by which watermark information that is not identifiable by the human eye is embedded in a part of an advertising content image in which similar image components continue; and (3) a method by which, focusing on a quantization noise component of an advertising content image, watermark information constituted by a noise component that is not identifiable by the human eye is embedded in a part of the quantization noise component. According to the present invention, any of the above methods may be adopted, and the method for creating the digital watermark image is not limited.

The digital watermark managing server 11 is a server that manages the digital watermark image created by the digital watermark creating client terminal 10, and includes a digital watermark management unit 110, an access information collection unit 112, and an operation result consolidating unit 114.

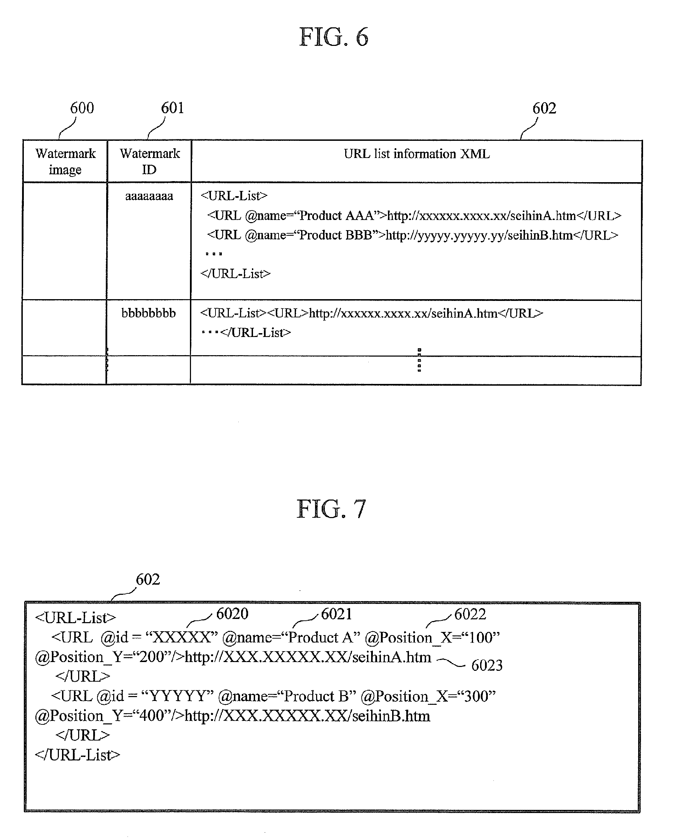

The digital watermark management unit 110 stores the digital watermark image created by the digital watermark creating client terminal 10 in a digital watermark information managing database 111 while associating each digital watermark ID with URL information indicating the location of the advertising content associated with the digital watermark image on a network, in a configuration illustrated in FIG. 6.

The digital watermark information management data shown in FIG. 6 includes a digital watermark image 600, a digital watermark ID 601, and a URL list information XML 602 associated therewith.

The URL list information XML 602, of which a detailed configuration is shown by way of example in FIG. 7, includes an ID 6020 of the digital watermark image, a name 6021 of the advertised product associated with the ID 6020, display coordinate position information 6022 for a digital watermark image icon for each advertised product (or advertised item for sale) that is displayed on an interactive screen 181 of the user terminal, and a URL 6023 indicating the location of the advertising content on the network.

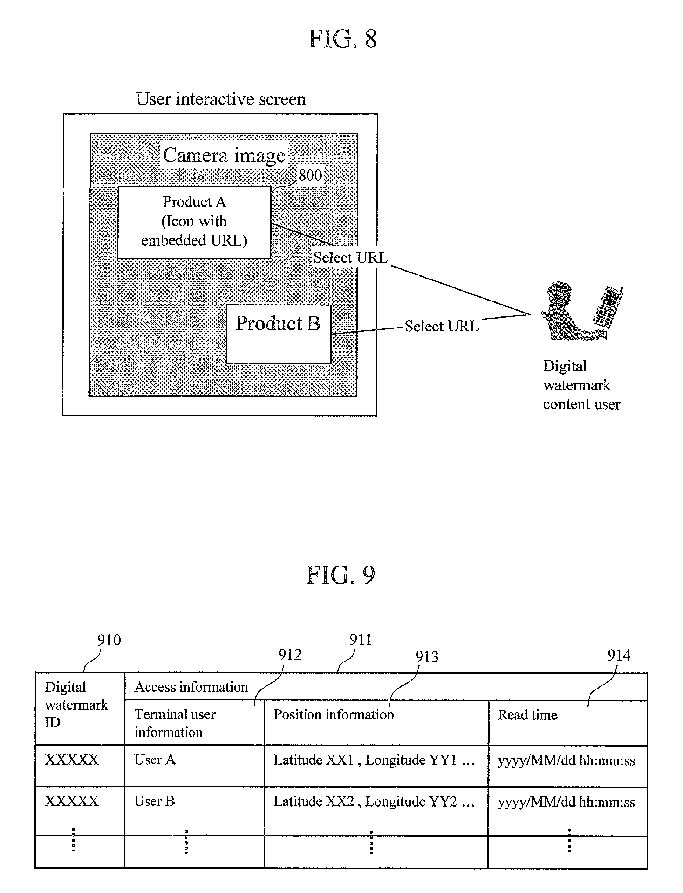

Each time an access to the advertising content associated with the digital watermark ID is made, the access information collection unit 112 collects access information 911 including a digital watermark ID 910, user information 912 of the user terminal as an access source, position information 913, and a time (current time) 914 of reading the advertising content, as shown in FIG. 9, and stores the access information in the access information collection database 113.

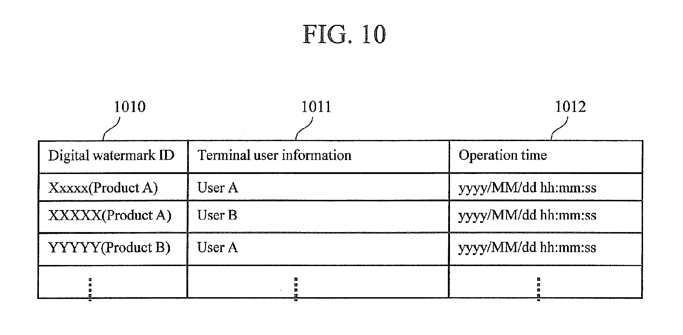

When a user 180 makes an operation for selecting an arbitrary advertised product in the digital watermark-attached content on the digital watermark utilizing client terminal 18, the operation result consolidating unit 114 collects the digital watermark ID indicating the selection of the icon of the digital watermark image associated with the advertised product, stores operation consolidating data configured as shown in FIG. 10 in the database 115, and utilizes the data for consolidating which of the multiple advertised products in the digital watermark-attached content has been selected. The operation consolidating data includes an operation ID 1010, terminal user information 1011, and an operation time 1012 of the select operation, as shown in FIG. 10.

Next, the advertising content server 12 memorizes the digital watermark-attached advertising content associated with the digital watermark ID, reads from the advertising content database 13 the advertising content designated by the URL of the digital watermark-attached advertising content in accordance with a request from the client terminal 18 via the network 19, and delivers the advertising content to the client terminal 18.

In this case, in the advertising content database 13, the digital watermark ID rendered into an icon image is stored together with the digital watermark-attached advertising content.

The advertising content print server 14 acquires the digital watermark-attached advertising content from the advertising content server 12, and prints the digital watermark-attached advertising content 17 on the paper medium 16, such as a leaflet or an advertising magazine, by using the printer apparatus 15, for publication. In this case, the printed digital watermark-attached advertising content includes advertising information for a plurality of advertised products.

The digital watermark utilizing client terminal 18 is provided with a user interactive screen 181, a camera device 182, and a digital watermark analysis unit 183. The digital watermark utilizing client terminal 18 acquires an image of the digital watermark-attached advertising content 17 printed on the paper medium 16 by using the camera device 182, extracts a digital watermark image from the image, and displays in the user interactive screen 181 a digital watermark image icon 800 for each of the advertised products embedded in the digital watermark-attached advertising content 17 as shown in FIG. 8. When the icon 800 is selected by the user 180, the digital watermark utilizing client terminal 18 transmits the digital watermark ID indicating the selection of the digital watermark image icon 800 to the managing server 11, acquires the details of the advertising content corresponding to the digital watermark ID from the managing server 11, and displays the details in the interactive screen 181.

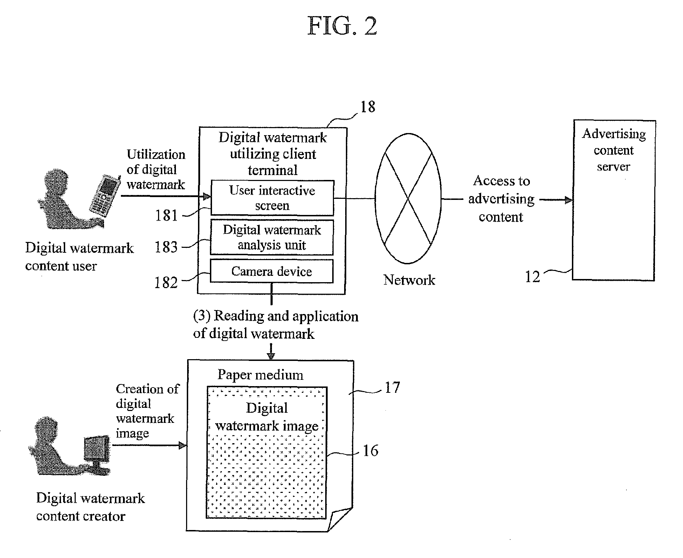

FIG. 2 illustrates the outline of utilization of advertising content utilizing the digital watermark.

As the digital watermark content user 180 operates the digital watermark utilizing client terminal 18 and the camera device 182 takes the image of the advertising content printed on the paper medium 16 with the embedded digital watermark image, such as a leaflet, the digital watermark analysis unit 183 performs an analysis and extracts the digital watermark IDs of digital watermark images of a plurality of advertised products from the advertising content printed on the paper medium 16. Then, the digital watermark image icon 800 for each of the advertised products is displayed in the user interactive screen 181, as shown in FIG. 8. When an operation for selecting the displayed icon 800 is performed, the digital watermark utilizing client terminal 18 transmits the digital watermark ID corresponding to the icon 800 to the digital watermark managing server 11, and acquires from the digital watermark managing server 11 the URL of the detailed information of the advertising content for the advertised product associated with the digital watermark ID.

When the URL of the detailed information of the advertising content displayed in the user interactive screen 181 is selected by the digital watermark content user 180, the digital watermark utilizing client terminal 18 transmits the URL to the advertising content server 12, acquires from the advertising content server 12 the detailed information of the advertising content corresponding to the URL from the advertising content database 13, and returns the detailed information to the client terminal 18 as a request source.

The client terminal 18 displays the detailed information of the requested advertising content in the user interactive screen 181.

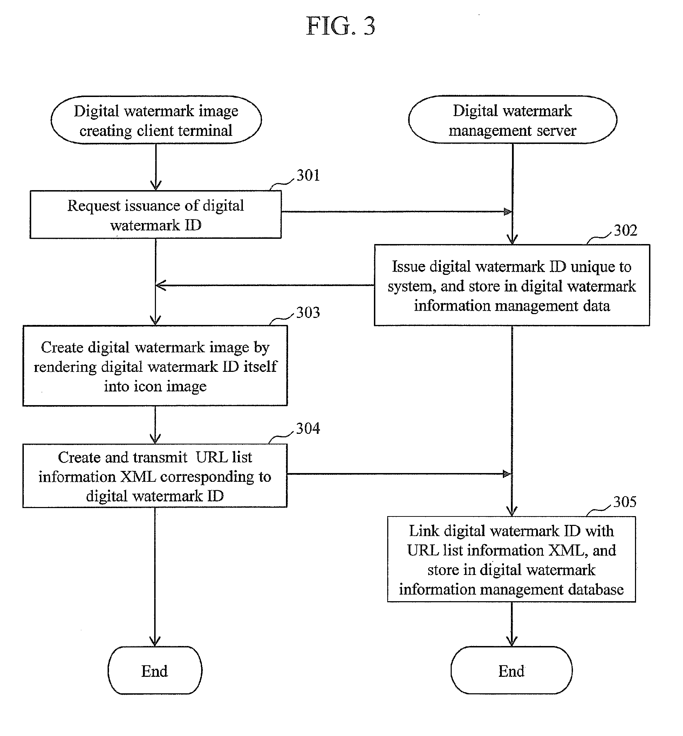

FIG. 3 is a flowchart of a process of creating the digital watermark image on the digital watermark creating client terminal 10.

First, the digital watermark creating client terminal 10, in order to create a digital watermark image, requests the digital watermark managing server 11 to issue a digital watermark ID (step 301).

In response, the digital watermark managing server 11 issues a digital watermark ID unique to the system, and stores it in the digital watermark information managing database 111 (step 302). Then, the digital watermark managing server 11 returns the issued digital watermark ID to the digital watermark creating client terminal 10 as the request source.

The digital watermark creating client terminal 10 creates a digital watermark image by rendering the digital watermark ID itself received from the managing server 11 into an icon image (step 303).

In this case, header information is attached to the icon image of the digital watermark ID so that the digital watermark ID and other IDs can be distinguished.

Thereafter, the URL list information XML indicating the location of the advertising content corresponding to the digital watermark ID on the network is created, and transmitted to the digital watermark managing server 11 together with the icon image of the digital watermark ID (step 304).

The digital watermark managing server 11 registers the received icon image of the digital watermark ID and the received URL list information XML in the digital watermark information managing database 111, linking them with the digital watermark ID stored in step 302 (step 305).

While it has been described that the digital watermark image is created by rendering the digital watermark ID itself into an icon image, an image may be created by attaching the digital watermark ID to an image arbitrarily selected by the creator. What matters is that the digital watermark ID can be extracted from the digital watermark image.

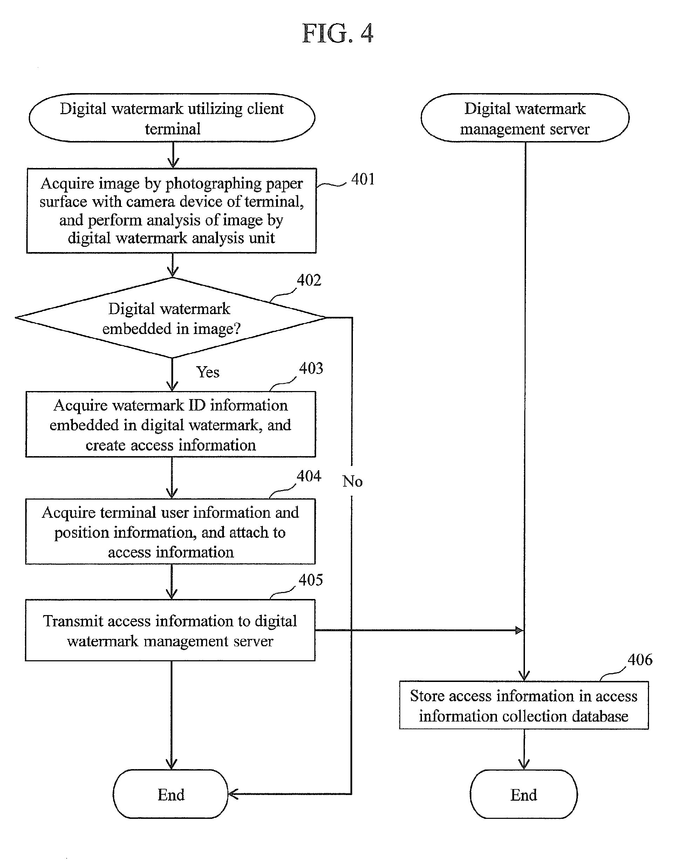

FIG. 4 is a flowchart illustrating the outline of a process involving the digital watermark utilizing client terminal 18 and the digital watermark managing server 11.

In the digital watermark utilizing client terminal 18, when the user 180 has taken an image of the digital watermark-attached advertising content 17 with the camera device 182 and the acquired image has been inputted, the digital watermark analysis unit 183 analyzes the acquired image (step 401).

The digital watermark analysis unit 183 determines whether the digital watermark image is embedded in the acquired image or not on the basis of the header information. When the digital watermark image is embedded, the digital watermark analysis unit 183 acquires its ID (step 402), and creates the access information of FIG. 7 (step 403). Then, the digital watermark analysis unit 183 calculates the current position information of the digital watermark utilizing client terminal 18 on the basis of a radio wave from a GPS satellite, and attaches the current position information to the access information, together with the current time 914 information (step 404). The digital watermark analysis unit 183 then creates access information collection data including the digital watermark ID 910 and the access information 911, and transmits the data to the digital watermark managing server 11 (step 405).

The access information collection unit 112 of the digital watermark managing server 11 registers the received access information in the access information collection database 113 (step 406).

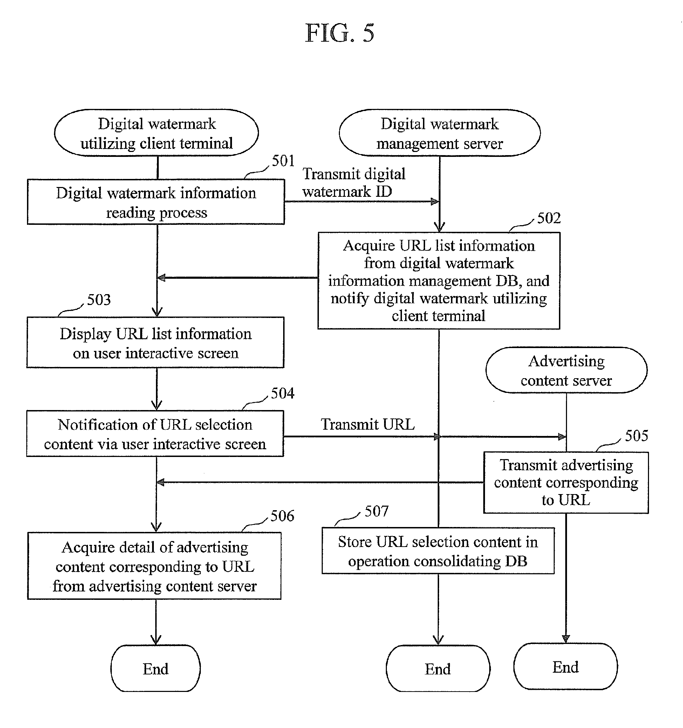

FIG. 5 is a flowchart of a process for accessing the advertising content server 12 in accordance with an operation on the digital watermark user interactive screen 181.

First, when the operation for reading the digital watermark information from the digital watermark-attached advertising content 17 is performed on the digital watermark utilizing client terminal 18 by using the camera device 182, the digital watermark analysis unit 183 extracts the digital watermark ID rendered into an icon image, and transmits the digital watermark ID to the digital watermark managing server 11 (step 501).

Upon reception of the digital watermark ID, the digital watermark managing server 11 acquires from the digital watermark information managing database 111 the URL list information XML 602 registered in association with the received digital watermark ID, and notifies the digital watermark utilizing client terminal 18 as the request source of the URL list information XML 602 (step 502).

The digital watermark utilizing client terminal 18 displays the URL list information XML 602 that it has received on the interactive screen 181 (step 503).

When the user 180 selects an arbitrary URL from the displayed URL list information XML 602, the selected URL is sent to the digital watermark managing server 11 and the advertising content server 12 (step 504).

The digital watermark managing server 11 stores the digital watermark ID corresponding to the URL selected by the user in the operation consolidating database 115, together with the operation consolidating data shown in FIG. 10 (step 507). While the example shown in FIG. 10 is not configured to store the URL, the configuration may be adapted to store the URL.

On the other hand, the advertising content server 12 acquires the detailed information about the advertising content from the URL selected by the user, and transmits the detailed information to the digital watermark utilizing client terminal 18 as the request source (step 505). The digital watermark utilizing client terminal 18 receives the detailed information about the advertising content corresponding to the URL selected by the user from the advertising content server 12, and displays the detailed information (step 506).

While in the foregoing embodiment the digital watermark managing server and the advertising content server are separately configured, they may be integrally configured. The same applies to the advertising content print server.

While the digital watermark-attached advertising content has been described as being printed on the paper medium, the digital watermark-attached advertising content may be displayed on a display apparatus screen.

### REFERENCE SIGNS LIST

- 10: Digital watermark creating client terminal
- 11: Digital watermark managing server
- 12: Advertising content server
- 13: Advertising content database
- 14: Advertising content print server
- 15: Printer apparatus
- 16: Paper medium
- 17: Digital watermark-attached advertising content
- 18: Digital watermark utilizing client terminal
- 102: Digital watermark image creating unit
- 110: Digital watermark management unit
- 111: Digital watermark information managing database
- 112: Access information collection unit
- 113: Access information collection database
- 114: Operation result consolidating unit
- 181: User interactive screen
- 182: Camera device
- 183: Digital watermark analysis unit

## Claims

1. A digital watermark advertising content service system comprising:
a client terminal equipped with a camera; and
a server that provides an advertising content associated with a digital watermark ID received from the client terminal,
wherein
the client terminal includes a means for reading a digital watermark image embedded in a medium with the advertising content printed or displayed thereon by using the camera, analyzing the digital watermark image, extracting the digital watermark ID from the digital watermark image, and transmitting the digital watermark ID to the server, and
the server includes a means for acquiring from a database a detail of the advertising content associated with the digital watermark ID received from the client terminal, and transmitting the detail to the client terminal as a request source for display.

2. The digital watermark advertising content service system according to claim 1, wherein the digital watermark image embedded in the medium is an icon image of the digital watermark ID that is uniquely determined for each detail of the advertising content.

3. The digital watermark advertising content service system according to claim 1, wherein the digital watermark image embedded in the medium is an image created by attaching to an arbitrary image the digital watermark ID that is uniquely determined for each detail of the advertising content.

4. The digital watermark advertising content service system according to any one of claims 1 to 3, wherein
the advertising content has a plurality of digital watermark images embedded therein, and
the client terminal transmits only the digital watermark ID of the digital watermark image selected by a user to the server.
